# EUROPÄISCHE PATENTSCHRIFT

(11) **EP 0 766 088 B1**
(45) Veröffentlichungstag und Bekanntmachung des Hinweises auf die Patenterteilung: **05.01.2000**
(21) Anmeldenummer: 96114128.0
(22) Anmeldetag: 04.09.1996
(51) Int. Cl.: G01P 3/481

(54) **Einrichtung zum Überwachen der Drehzahl eines Rades eines Kraftfahrzeuges und mindestens einer weiteren Zustandsgrösse des Kraftfahrzeuges**
Device for monitoring the rotational speed of a vehicle wheel and at least one other variable of the vehicle
Dispositif pour la surveillance de la vitesse d'une roue d'un véhicule automobile et d'au moins une autre variable du véhicule automobile

(30) Priorität: 28.09.1995 DE 19536006
(43) Veröffentlichungstag der Anmeldung: 02.04.1997
(73) Patentinhaber: RICHARD HIRSCHMANN GESELLSCHAFT m.b.H., 6830 Rankweil-Brederis (AT)
(72) Erfinder: Federer, Arnold, 6840 Götzis (AT); Waibel, Thomas, Dr., 6840 Götzis (AT)
(74) Vertreter: Hefel, Herbert, Dipl.-Ing.

(56) Entgegenhaltungen:
- EP-A- 0 593 925
- WO-A-95/22467
- DE-A- 2 606 012

## Beschreibung

Die Erfindung betrifft eine Einrichtung zum Überwachen der Drehzahl eines Rades eines Kraftfahrzeuges und mindestens einer weiteren Zustandsgröße des Kraftfahrzeuges, insbesondere des Bremsbelag-Verschleißes, mit einem Drehzahl-Sensor zur Erfassung der Drehzahl des Rades und zumindest einem parallel dazu geschalteten Sensor für die weitere Zustandsgröße, wobei die Sensoren über eine gemeinsame Leitung mit einer räumlich entfernt gelegenen Auswerteinheit verbunden sind.

Eine Einrichtung dieser Art ist aus der DE-OS 2606 012 bekanntgeworden. Der Drehzahlsensor dieser Einrichtung ist ein induktiver Geber, der gegenüber einem mit der Nabe des Kraftfahrzeuges verbundenen Impulsrad angeordnet ist. Parallel zum Drehzahl-Sensor ist ein Verschleiß-Sensor geschaltet, der durch in den Bremsbelägen vorgesehene Kontaktstifte realisiert ist. Wird bei einem Bremsbelag die Belagverschleißgrenze erreicht, so stellt der Kontaktstift eine Kurzschlußverbindung zu der an Masse liegenden Bremsscheibe oder Bremsbacke her. Dadurch wird die Induktionsspule des Drehzahl-Sensors ganz oder bei Verwendung eines Widerstandes teilweise kurzgeschlossen. Bei einem vollständigen Kurzschluß fällt das über die Leitung zur räumlich entfernt gelegenen Auswerteinheit übertragene Signal des Drehzahl-Sensors aus. Bei einem teilweisen Kurzschluß wird das Signal des Drehzahl-Sensors gedämpft und wird dadurch schlechter detektierbar. Bei einer kleinen Drehzahl des Rades ist die in der Induktionsspule des Drehzahl-Sensors induzierte Spannung sehr gering und wird beim Ansprechen des Kontaktstiftes im Bremsbelag noch weiter verringert, so daß eine Auswertung kaum oder nicht mehr möglich ist. Gerade bei niedrigen Drehzahlen ist eine sichere Auswertung des Signals des Drehzahl-Sensors aber wichtig, um eine einwandfreie Funktion eines Antiblockiersystems zu gewährleisten. Auch bei höheren Drehzahlen ist die Unterscheidung der beiden Signale in der Auswerteinheit schwierig, da aufgrund der Drehzahlabhängigkeit der Amplitude des induktiven Gebers die Vergleichsschwellen der Auswerteinheit von der Drehzahl abhängig sind.

Eine andere Einrichtung dieser Art ist aus der DE-GM 8804 239 bekanntgeworden. Bei dieser Einrichtung, bei der ein Drehzahl-Sensor mit Markierungen an der Fahrzeugbremse zusammenwirkt, sind am Bremssattel sowohl der Drehzahl-Sensor des Antiblockiersystems als auch ein Bremsverschleiß-Sensor angeordnet, die beide Daten an eine gemeinsame Auswertelektronik liefern sollen. Die beiden Sensoren sind parallel zueinander geschaltet, und die Vorrichtung zielt darauf ab, elektronische Bausteine und Kabel sowie Montageteile und Montagekosten einzusparen. Die gezeigten Maßnahmen beschränken sich im wesentlichen auf die Erläuterung mechanischer Teile ohne Angaben darüber, wie diese Einrichtung - elektrisch gesehen - arbeiten soll.

Aufgabe der Erfindung ist eine Verbesserung dieser Einrichtungen. Es soll eine zuverlässige Detektion des Drehzahlsensorsignals auch bei aktivem Verschleiß-Sensor und bei niedrigen Drehfrequenzen des Rades des Kraftfahrzeuges ermöglicht werden.

Erfindungsgemäß gelingt dies bei einer Einrichtung der eingangs genannten Art dadurch, daß die Sensoren Binärsignale als Ausgangssignale aufweisen, daß in Serie zu den Sensoren jeweils eine Stromquelle geschaltet ist, wobei die Strompegel der Stromquellen jeweils unterschiedliche Werte aufweisen und der Strompegel der in Serie zum Drehzahl-Sensor geschalteten Stromquelle den größten Wert aufweist, und daß die Komparatorstufen der Auswerteinheit zur Auswertung des Stromes durch die gemeinsame Leitung für jeden Sensor genau einen Schwellenwert aufweisen, wobei der Schwellenwert des Drehzahl-Sensors kleiner ist als der Strompegel der dem Drehzahl-Sensor zugeordneten Stromquelle und größer ist als der Strompegel der dem weiteren Sensor zugeordneten Stromquelle und der Schwellenwert des weiteren Sensors kleiner ist als der Strompegel der dem weiteren Sensor zugeordneten Stromquelle.

Die binären Signale der Sensoren schalten die in Serie zu den Sensoren angeordneten Stromquellen, und die Ströme der einzelnen parallelen Zweige werden in der gemeinsamen Leitung, die mit der Auswerteinheit verbunden ist, aufsummiert und können in der Auswerteinheit ausgewertet werden. Die Stromquellen gewährleisten einen funktionssicheren Betrieb der Einrichtung auch bei den in der Praxis vorkommenden starken Schwankungen der Spannung des Bordnetzes (bis zu einem Faktor 3!). Um das Signal des Drehzahl-Sensors, welches das wichtigste ist und unabhängig vom Zustand des weiteren Sensors bzw. der weiteren Sensoren möglichst sicher ausgewertet werden soll, direkt erhalten zu können, wird der Stromquelle, die in Serie zum Drehzahl-Sensor liegt, der größte Stromwert zugewiesen.

Aus der DE-OS 43 08 031 und der DE-OS 43 08 030 sind Vorrichtungen zum Erfassen der Bewegung eines bewegbaren Teils bekannt, die besonders geeignet zur Verwendung in einem Stellantrieb sind, der in einem Kraftfahrzeug angeordnet ist. Diese Vorrichtungen weisen ebenfalls Stromquellen auf, deren Ströme sich in einer gemeinsamen Leitung addieren. Die Art der Auswertung der Signale ist aber eine andere und wesentlich komplizierter. Es sind für die beiden verwendeten Sensoren Komparatorstufen mit drei Komparatoren vorgesehen, die von einem Mikroprozessor ausgewertet werden. Diese nicht gattungsgemäßen Vorrichtungen sind daher zur Überwachung der Drehzahl eines Rades bei einem Antiblockiersystem kaum geeignet.

Als Drehzahl-Sensor ist bevorzugt ein aktiver Hall-Sensor vorgesehen, dessen Stromversorgung ebenfalls über die gemeinsame Leitung, welche mit der Auswerteinheit verbunden ist, erfolgt.

Weitere Vorteile und Einzelheiten der Erfindung werden im folgenden anhand der beiliegenden Zeichnung erläutert.

In dieser zeigt:
- Fig. 1: ein Prinzipschaltbild einer ersten Ausführungsform der Erfindung;
- Fig. 2: eine Darstellung der Stromverhältnisse bei zwei parallelen Sensoren und
- Fig. 3: ein Prinzipschaltbild einer weiteren Ausführungsform der Erfindung.

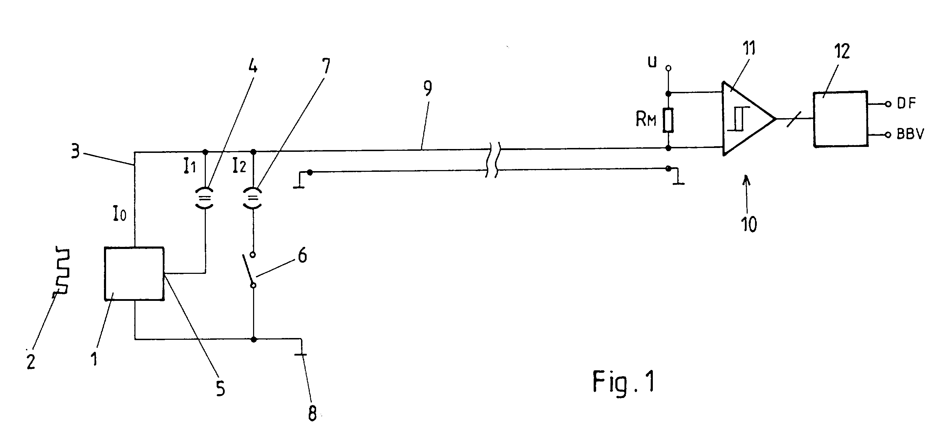

Das Prinzipschaltbild der Ausführungsform der Erfindung nach Fig. 1 zeigt einen Hall-Sensor 1, der gegenüber einem mit der Nabe des Kraftfahrzeuges verbundenen Impulsrad 2 angeordnet ist. Über den Leitungszweig 3 fließt der Versorgungsstrom I₀ des Hall-Sensors 1. In Serie zum Hall-Sensor 1 liegt die Stromquelle 4. Der Hall-Sensor 1 gibt an seinem Ausgang 5 Impulse entsprechend der Drehzahl des Impulsrades 2 aus. Diese Impulse stellen eine Abfolge von binären Signalen dar, die die Stromquelle 4 im Falle eines logischen Wertes 0 ein- und im Falle eines logischen Wertes 1 ausschalten. Aus der Frequenz der Impulsfolge kann die Drehzahl des Impulsrades 2 und somit des Rades des Kraftfahrzeuges bestimmt werden. Bei Stillstand des Impulsrades 2 liegt am Ausgang 5 des Hall-Sensors ein logischer Wert 1 vor und die Stromquelle 4 ist ausgeschaltet.

Parallel zum Zweig aus Hall-Sensor 1 und Stromquelle 4 liegt ein symbolisch als Schalter dargestellter Verschleiß-Sensor 6 des Bremsbelages und die in Serie zum Verschleiß-Sensor 6 angeordnete Stromquelle 7. Der Verschleiß-Sensor 6 wird durch Kontaktstifte realisiert, mit denen die Bremsbeläge ausgestattet sind. Ist die Verschleißgrenze eines Bremsbelages erreicht, so ist der Kontaktstift dieses Bremsbelages freigelegt und schleift an der mit Masse 8 verbundenen Bremsscheibe oder Bremstrommel, so daß der logische Wert des Verschleiß-Sensors 6 von logisch 1 auf logisch 0 abfällt. Dadurch wird die Stromquelle 7 aktiviert.

Durch die gemeinsame Leitung 9, die mit der Auswerteinheit 10 verbunden ist, fließt die Summe des Versorgungsstromes I₀ und der Ströme I₁, I₂ der Stromquellen 4, 7, falls diese aktiviert sind. Der durch die Leitung 9 fließende Strom wird von der Auswerteinheit 10 ausgewertet. Dazu weist diese einen mit der Spannung U des Bordnetzes des Kraftfahrzeuges verbundenen Meßwiderstand R_{M} auf. Die an ihm abfallende Spannung wird Komparatorstufen 11 und einer Auswertlogik 12 zugeführt, an deren Ausgang das Signal DF der Drehzahl des Impulsrades 2 und das Signal BBV des Bremsbelagverschleißes zur Verfügung stehen.

Wenn der Bremsbelagverschleiß BBV nur bei fahrendem Fahrzeug ausgewertet werden soll, wäre es prinzipiell denkbar, daß die Strompegel I₁, I₂ der Stromquellen 4, 7 gleiche oder ähnliche Werte aufweisen. Eine Unterscheidung der Signale des Drehzahl-Sensors 1 und des Verschleiß-Sensors 2 wäre möglich, indem festgestellt wird, ob das detektierte Signal eine Folge von Impulsen oder zeitlich konstant ist. Der Schwellenwert, bei dem die Signale ausgewertet werden, liegt dabei über dem Pegel, der dem Versorgungsstrom I₀ entspricht. Um eine Auswertung der Drehzahl auch bei aktivem Verschleiß-Sensor 6 zu ermöglichen, könnte ein zweiter Schwellenwert vorgesehen sein, der über dem Pegel liegt, der der Summe aus dem Versorgungsstrom I₀ und dem Strompegel I₂ entspricht und bei dem das Signal vom Drehzahl-Sensor bei aktiviertem Verschleiß-Sensor 6 ausgewertet wird. Nachteilig ist dabei die relativ komplizierte Auswertung der Signale. Weiters rührt das Signal des Verschleiß-Sensors von einem Kontaktstift her, der über eine möglicherweise rotglühende Bremsscheibe schleift. Dieses Signal kann daher von Störungen überlagert sein, so daß es nicht konstant ist, was zu Problemen bei der Auswertung der Drehfrequenz des Rades des Kraftfahrzeuges führen kann.

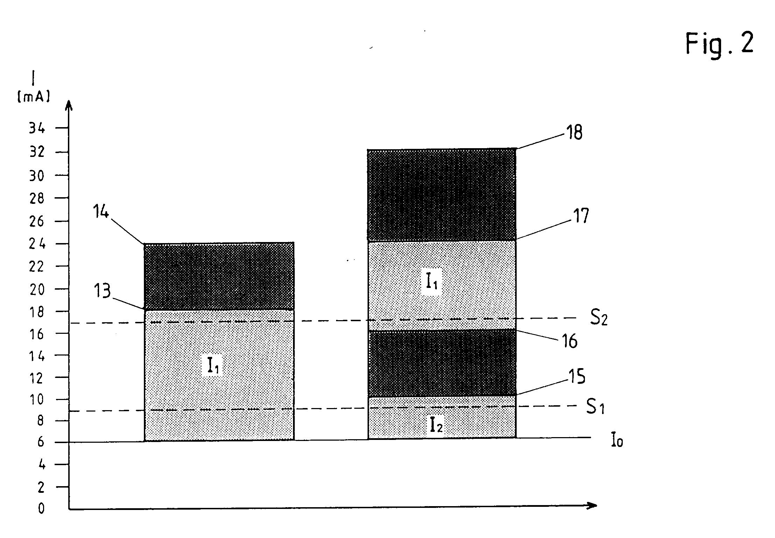

Bei einer bevorzugten Ausführungsform der Erfindung sind die Strompegel I₁, I₂ der Stromquellen 4, 7 verschieden, ausgehend von der Überlegung, daß das Signal des Drehzahl-Sensors 1 am wichtigsten ist und auch bei aktivem Verschleiß-Sensor sicher ausgewertet werden können soll. Diese eine Art Amplitudenmodulation darstellende Art der Kennzeichnung der Signale wird anhand von Fig. 2 besprochen. Zunächst ist festzustellen daß besonders der Versorgungsstrom I₀, aber auch die Strompegel I₁, I₂ fabrikationsbedingte Streuungen aufweisen. Beispielsweise beträgt der Versorgungsstrom des Drehzahl-Sensors 1 6 mA ± 30%, der Strompegel I₁ der Stromquelle 4 in Serie zum Drehzahl-Sensor 1 beträgt 15 mA ± 5% und der Strompegel I₂ der Stromquelle 7 in Serie zum Verschleiß-Sensor 6 beträgt 7 mA ± 5%. In Fig. 2 ist der Versorgungsstrom I₀ bei seinem Nennwert von 6 mA eingezeichnet. Im linken Diagramm von Fig. 2 ist der Fall eingezeichnet, daß nur die Stromquelle 4 in Serie zum Drehzahl-Sensor 1 aktiv ist. Der minimale Wert 13 der Summe aus I₀ und I₁ beträgt dann unter Berücksichtigung der Toleranzen in etwa 18 mA, der maximale Wert 14 dieser Summe in etwa 24 mA. Bei aktiver Stromquelle 7 in Serie zum Verschleiß-Sensor 6 beträgt der minimale Wert 15 der Summe aus I₀ und I₂ in etwa 10 mA und der maximale Wert 16 dieser Summe etwa 16 mA. Sind beide Stromquellen 4, 7 aktiv, wie im rechten Diagramm von Fig. 2 eingezeichnet, so beträgt der minimale Wert 17 der Summe aus den drei Strömen I₀, I₁, I₂ etwa 24 mA und der maximale Wert 18 dieser Summe etwa 32 mA.

Zur Auswertung dieser amplitudenmodulierten Signale sind in den Komparatorstufen 11 der Auswerteinheit 10 zwei Schwellenwerte S₁ und S₂ festgelegt. Der Schwellenwert S₁ entspricht einem Strom durch den Meßwiderstand R_{M} von 9 mA, der Schwellenwert S₂ einem Strom von 17 mA. Die Toleranzen dieser Schwellenwerte sind sehr klein und betragen z.B. 1%. Beim Schwellenwert S₂ kann, wie aus Fig. 2 ersichtlich, unbeeinflußt vom Signal des Verschleiß-Sensors 6 die Drehzahl des Impulsrades 2 ausgewertet werden. Und zwar entspricht der Ausgabewert DF der Logik 12 gerade dem Signal beim Schwellenwert S₂. Die Auswertung des Signales des Verschleiß-Sensors 6 ist hingegen nur möglich, wenn die Stromquelle 4 gerade nicht aktiv ist. Dies ist zum einen bei stehendem Impulsrad 2, zum andern auch bei sich drehendem Impulsrad 2 in den Zeiten, in denen bei den einzelnen Impulsen eine logische 1 am Ausgang 5 des Drehzahl-Sensors 1 anliegt. Zu diesen Zeitpunkten kann in der Logik 12 bestimmt werden, ob der Schwellenwert S₁ überschritten und gleichzeitig der Schwellenwert S₂ unterschritten ist. Diese logische Verknüpfung wird als Signal BBV von der Logik 12 ausgegeben.

Allgemeiner könnte man die Bedingungen für die Strompegel der Stromquellen in Serie zu den Sensoren und die Schwellenwerte für die Komparatorstufen 11 folgendermaßen angeben: Bei einem vorgegebenen Strompegel I₂ einer ersten Stromquelle, in diesem Fall der Stromquelle 7 in Serie zum Verschleiß-Sensor 6, gilt für den Strompegel I₁ der zweiten Stromquelle die Bedingung, daß der innerhalb der Fehlertoleranzen kleinste Wert der Summe aus dem Strompegel I₁ der zweiten Stromquelle und dem Versorgungsstrom I₀ größer sein muß als der innerhalb der Fehlertoleranzen größte Wert der Summe aus dem Strompegel der ersten Stromquelle I₂ und dem Versorgungsstrom I₀. In den Komparatorstufen 11 der Auswerteinheit wird dann ein erster Schwellenwert S₁ festgelegt, der größer ist als der größte Wert des Versorgungsstromes I₀ und kleiner ist als der kleinste Wert der Summe aus dem Strompegel der ersten Stromquelle I₂ und dem Versorgungsstrom I₀. Der zweite Schwellenwert S₂ weist einen Wert auf, der größer ist als der größte Wert der Summe aus dem Strompegel I₂ der ersten Stromquelle und dem Versorgungsstrom I₀ und kleiner ist als der kleinste Wert der Summe aus dem Strompegel I₁ der zweiten Stromquelle, dem Strompegel I₂ der ersten Stromquelle und dem Versorgungsstrom I₀.

Die Bedingung für die Strompegel kann in der Praxis beispielsweise dadurch erfüllt sein, daß die Strompegel der einzelnen Sensoren sich jeweils etwa um einen Faktor 2 unterscheiden.

Analog kann ein Strompegel einer Stromquelle in Serie zu einem dritten Sensor festgelegt werden und ein weiterer Schwellenwert in den Komparatorstufen 11. Als dritter Sensor käme beispielsweise ein Sensor für den Reifendruck eines Rades in Frage. Ebenso wäre eine Erweiterung auf vier oder mehrere Sensoren möglich. Um eine von den Zuständen der übrigen Sensoren unbeeinflußte Auswertung des Signals des Drehzahl-Sensors 1 zu ermöglichen, wird der Stromquelle 4 in Serie zum Drehzahl-Sensor 1 immer der größte Wert des Strompegels zugeordnet. Die Auswertung des Signals des Drehzahl-Sensors 1 erfolgt dann beim größten Schwellenwert. Die Signale der übrigen Sensoren können jeweils ausgewertet werden, wenn alle Stromquellen mit einem Strompegel, der größer ist als der Strompegel der Stromquelle des betrachteten Sensors, inaktiv sind.

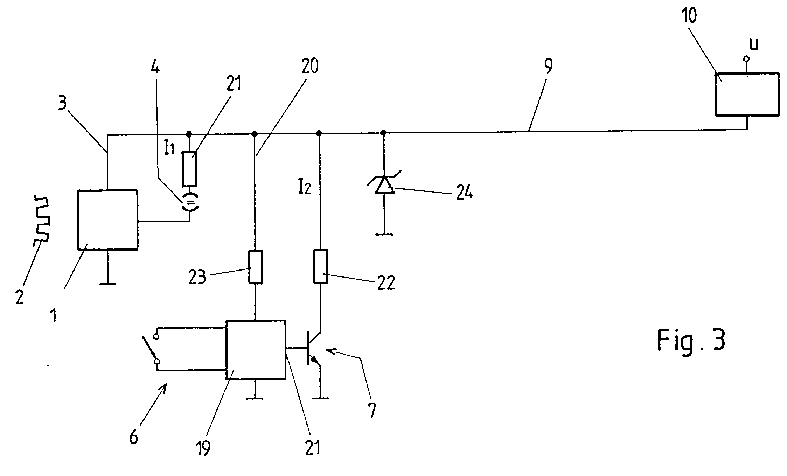

Eine weitere Ausführungsform der Erfindung ist in Fig. 3 gezeigt. Ein hauptsächlicher Unterschied dieses Ausführungsbeispieles besteht darin, daß dem Verschleiß-Sensor 6 eine Auswertelektronik 19 zugeordnet ist, deren Stromversorgung über die Leitung 20 erfolgt.

Den Verschleiß-Sensor könnte man hier als "aktiven Sensor" ansehen. Der über die Leitung 9 fließende Versorgungsstrom I₀ setzt sich in diesem Fall also aus dem über die Leitung 3 fließenden Versorgungsstrom des Drehzahl-Sensors 1 und dem über die Leitung 20 fließenden Versorgungsstrom der Auswertelektronik 19 zusammen. Wie bereits gesagt, ist der Kontaktstift im Bremsbelag kein idealer Schalter, da er mit hoher Geschwindigkeit über die unter Umständen rotglühende Bremsscheibe oder Bremsbacke schleift. Da der Kontaktstift im elektrisch nicht leitenden Material des Bremsbelages eingebettet ist, kann es außerdem zu statischen Aufladungen kommen, welche zu Überspannungen führen, die die Schaltung und insbesondere den Drehzahl-Sensor 1 gefährden könnten. Die Auswertelektronik 19 hat nun die Aufgabe, das vom Kontaktstift des Verschleiß-Sensors 6 kommende Signal in ein sauberes Binärsignal am Ausgang 21 umzuwandeln. Die in Serie zum Verschleiß-Sensor 6 liegende Stromquelle 7 ist hier durch einen Transistor dargestellt. Zum Schutz der Schaltung und insbesondere des Drehzahl-Sensors 1 und dessen Stromquelle 4 sind weiters Schutzwiderstände 21, 22, 23 und eine Zenerdiode 24 vorgesehen.

Weiters können auch Sensoren vorgesehen sein, welche mehrere binäre Ausgänge aufweisen. In Serie zu jedem dieser Ausgänge wäre dann eine Stromquelle mit einem unterschiedlichen Pegel anzuordnen.

## Patentansprüche

1. Einrichtung zum Überwachen der Drehzahl eines Rades eines Kraftfahrzeuges und mindestens einer weiteren Zustandsgröße des Kraftfahrzeuges, insbesondere des Bremsbelag-Verschleißes, mit einem Drehzahl-Sensor zur Erfassung der Drehzahl des Rades und zumindest einem parallel dazu geschalteten weiteren Sensor für die weitere Zustandsgröße, wobei die Sensoren über eine gemeinsame Leitung mit einer räumlich entfernt gelegenen Auswerteinheit verbunden sind, dadurch gekennzeichnet, daß die Sensoren (1, 6) Binärsignale als Ausgangssignale aufweisen, daß in Serie zu den Sensoren (1, 6) jeweils eine Stromquelle (4, 7) geschaltet ist, wobei die Strompegel (I₁, I₂) der Stromquellen (4, 7) jeweils unterschiedliche Werte aufweisen und der Strompegel (I₁) der in Serie zum Drehzahl-Sensor (1) geschalteten Stromquelle (4) den größten Wert aufweist, und daß die Komparatorstufen (11) der Auswerteinheit (10) zur Auswertung des Stromes durch die gemeinsame Leitung (9) für jeden Sensor (1, 6) genau einen Schwellenwert (S₁, S₂) aufweisen, wobei der Schwellenwert (S₂) des Drehzahl-Sensors (1) kleiner ist als der Strompegel (I₁) der dem Drehzahl-Sensor (1) zugeordneten Stromquelle (4) und größer ist als der Strompegel (I₂) der dem weiteren Sensor (6) zugeordneten Stromquelle (7) und der Schwellenwert (S₁) des weiteren Sensors (6) kleiner ist als der Strompegel (I₂) der dem weiteren Sensor (6) zugeordneten Stromquelle.

2. Einrichtung nach Anspruch 1, dadurch gekennzeichnet, daß die Auswerteinheit (10) ein Überschreiten des Schwellenwertes (S₁) des weiteren Sensors (6) bei inaktiver Stromquelle (4) des Drehzahl-Sensors (1) erfaßt.

3. Einrichtung nach einem der Ansprüche 1 oder 2, dadurch gekennzeichnet, daß im Falle zweier oder mehrerer weiterer Sensoren (6) der Schwellenwert (S₂) des Drehzahl-Sensors (1) größer ist als die Summe der Strompegel (I₂) der den weiteren Sensoren (6) zugeordneten Stromquellen (7).

4. Einrichtung nach einem der Ansprüche 1 bis 3, dadurch gekennzeichnet, daß der Versorgungsstrom (I₀) der Sensoren (1, 6) ebenfalls über die gemeinsame Leitung (9) fließt, wobei die Schwellenwerte (S₁, S₂) der Komparatorstufen (11) um die Größe des Versorgungsstromes (I₀) höher angesetzt sind.

5. Einrichtung nach einem der Ansprüche 1 bis 4, dadurch gekennzeichnet, daß die Strompegel (I₁, I₂) der Stromquellen (4, 7) sich jeweils um etwa einen Faktor 2 unterscheiden.

## Claims

1. A device for monitoring the rotational speed of a wheel of a motor vehicle and at least one further state variable of the motor vehicle, in particular the brake-pad wear, with a rotational-speed sensor for detecting the rotational speed of the wheel and at least one further sensor arranged parallel thereto for the further state variable, the sensors being connected by way of a common line to an evaluation unit arranged spatially at a distance, **characterized in that** the sensors (1, 6) have binary signals as output signals, one respective current source (4, 7) is connected in series with the sensors (1, 6), wherein the current levels (**I**_{**1**}**, I**_{**2**}) of the current sources (4, 7) have different values in each case and the current level (**I**_{**1**}) of the current source (4) connected in series to the rotational-speed sensor (1) has the highest value, and the comparator stages (11) of the evaluation unit (10) for evaluating the current through the common line (9) for each sensor (1, 6) have precisely one threshold value (**S**_{**1**}**, S**_{**2**}), wherein the threshold value (**S**_{**2**}) of the rotational-speed sensor (1) is lower than the current level (**I**_{**1**}) of the current source (4) associated with the rotational-speed sensor (1) and higher than the current level (**I**_{**2**}) of the current source (7) associated with the further sensor (6), and the threshold value (**S**_{**1**}) of the further sensor (6) is lower than the current level (**I**_{**2**}) of the current source associated with the further sensor (6).

2. A device according to Claim 1, **characterized in that** the evaluation unit (10) detects the threshold value (**S**_{**1**}) of the further sensor (6) being exceeded when the current source (4) of the rotational-speed sensor (1) is inactive.

3. A device according to one of Claims 1 and 2, **characterized in that** in the case of two or more further sensors (6) the threshold value (**S**_{**2**}) of the rotational-speed sensor (1) is greater than the sum of the current levels (**I**_{**2**}) of the current sources (7) associated with the further sensors (6).

4. A device according to one of Claims 1 to 3, **characterized in that** the supply current (**I**_{**0**}) of the sensors (1, 6) likewise flows by way of the common line (9), wherein the threshold values (**S**_{**1**}**, S**_{**2**}) of the comparator stages (11) are set higher by the magnitude of the supply current (**I**_{**0**}).

5. A device according to one of Claims 1 to 4, **characterized in that** the current levels (**I**_{**1**}**, I**_{**2**}) of the current sources (4, 7) differ in each case by approximately a factor of 2.

## Revendications

1. Dispositif de surveillance de la vitesse de rotation d'une roue d'un véhicule automobile et d'au moins une autre grandeur d'état du véhicule automobile, en particulier de l'usure de la garniture de frein, avec un capteur de vitesse de rotation, pour enregistrer la vitesse de rotation de la roue, et au moins un autre capteur, lui étant branché en parallèle, pour enregistrer l'autre grandeur d'état, les capteurs étant reliés par l'intermédiaire d'une ligne commune à une unité d'exploitation placée spatialement à distance,
caractérisé en ce que
les capteurs (1, 6) présentent comme signaux de sortie des signaux binaires, en ce que chaque fois une source de courant (4, 7) est branchée en série aux capteurs (1, 6), le niveau d'intensité (I₁, I₂) des sources de courant (4, 7) présentant chaque fois des valeurs différentes, et le niveau d'intensité (I₁) de la source de courant (4) branchée en série au capteur de vitesse de rotation (1) présentant la plus grande valeur, et en ce que les étages comparateurs (11) de l'unité d'exploitation (10) présentent, pour exploiter l'intensité passant dans la ligne (9) commune pour chaque capteur (1, 6), précisément une valeur de seuil (S₁, S₂), la valeur de seuil (S₂) du capteur de vitesse de rotation (1) étant inférieure au niveau d'intensité (I₁) de la source de courant (4) associée au capteur de vitesse de rotation (1) et supérieure au niveau d'intensité (I₂) de la source de courant (7) associée à l'autre capteur (6), et la valeur de seuil (S₁) de l'autre capteur (6) étant inférieure au niveau d'intensité (I₂) de la source de courant associée à l'autre capteur (6).

2. Dispositif selon la revendication 1,
caractérisé en ce que
l'unité d'exploitation (10) enregistre tout dépassement de la valeur de seuil (S₁) de l'autre capteur (6) lorsque la source de courant (4) du capteur de vitesse de rotation (1) est inactive.

3. Dispositif selon l'une des revendications 1 ou 2,
caractérisé en ce que
dans le cas où on a deux autres capteurs (6) ou plus, la valeur de seuil (S₂) du capteur de vitesse de rotation (1) est supérieure à la somme du niveau d'intensité (I₂) des sources de courant (7) associées aux autres capteurs (6).

4. Dispositif selon l'une des revendications 1 à 3,
caractérisé en ce que
le courant d'alimentation (I₀) des capteurs (1, 6) passe également par la ligne commune (9), les valeurs de seuil (S₁, S₂) des étages comparateurs (11) étant placées plus haut, de la valeur du courant d'alimentation (I0).

5. Dispositif selon l'une des revendications 1 à 4,
caractérisé en ce que
les niveaux de courant (I₁, I₂) des sources de courant (4, 7) se distinguent chaque fois d'à peu près un facteur 2.
